# EUROPEAN PATENT SPECIFICATION

(11) **EP 0 844 789 B1**
(45) Date of publication and mention of the grant of the patent: **11.02.2004**
(21) Application number: 97120457.3
(22) Date of filing: 21.11.1997
(51) Int. Cl.: H04N 5/64, G06F 1/16

(54) **Display apparatus**
Anzeigegerät
Appareil d'affichage

(30) Priority: 21.11.1996 KR 9656175
(43) Date of publication of application: 27.05.1998
(73) Proprietor: Samsung Electronics Co., Ltd., Suwon City, Kyungki-do (KR)
(72) Inventor: Han, Sang-hyun, Kiheung-eup, Yongin-gun, Kyungki-do (KR)
(74) Representative: Reinhard - Skuhra - Weise & Partner

(56) References cited:
- US-A- 5 122 928
- US-A- 5 294 994
- US-A- 5 363 150
- US-A- 5 575 545

## Description

### BACKGROUND OF THE INVENTION

### Field of the Invention

The present invention relates to a display apparatus and, more particularly, to a display apparatus enabling access to the main printed circuit board (PCB) without excessive disassembly of structural components.

### Discussion of Related Art

The advent of multimedia computer technology has resuhed in the proliferation of computers which have a wide variety of functions, including audio and video processing as well as data management, so that the display apparatus becomes more complex. That is, besides the typically bottom-mounted main PCB assembly, a display apparatus intended for use with a multimedia computer generally requires additional side-mounted PCB assemblies for processing motion-picture video signals. Thus, the display apparatus becomes bulkier and heavier while its internal structure becomes more intricate, all of which encumbers repair procedures.

United States Patent US 5,122,928 discloses a monitor housing which can be easily disassembled and reassembled without damaging the durable housing in the event that a component of the circuit board provided therein needs to be replaced. The monitor comprises a front case for housing a cathode-ray tube on which images are displayed; a main printed circuit board assembly installed beneath said cathode-ray tube; a lower frame secured to said front case; a board bracket secured to said lower frame, for holding said main PCB assembly; a bottom bracket having first assembly means for coupling with said board bracket; and a stand, for supporting the monitor.

United States Patent US 5,575,545 discloses a monitor shell having a first frame and a second frame engageable with a first frame including a hollow rectangular panel, two vertical walls, an upper wall, a U-shape lower wall and a tray projecting downwandly from the U-shape lower wall; two brackets including a first branch, a second branch projecting from the first branch, a third branch projecting from the second branch and an elastic branch projecting from the first branch, whereas the first branch of each bracket defines the groove for receiving a circuit board and a hole.

Particularly, for the test or repair of the main PCB assembly which is disposed on the bottommost portion ofthe interior of the display apparatus, after removing a rear case, the side-mounted PCB assemblies, and possibly shields or guards therefor, as well as a multiple bracket and stand assembly must all be separated from each other first. Only then may the main PCB assembly be taken out and worked on, whereby the separated board is turned over so that the soldered portion may be heated and melted and the circuit components to be replaced can be exchanged. Such a procedure for repairing the main PCB assembly of a display apparatus according to the conventional art, in which various display elements should be all separated, is difficult and complex and therefore time-consuming and costly.

### SUMMARY OF THE INVENTION

Accordingly, the present invention is directed to a display apparatus that substantially obviates one or more of the problems due to limitations and disadvantages of the related art.

An object of the invention is to provide a display apparatus which enables the repair of a main PCB assembly without necessitating excessive disassembly.

To accomplish this and other objects of the present invention, there is provided a display apparatus comprising: a front case for housing a cathode-ray tube on which images are displayed; a main printed circuit board (PCB) assembly installed beneath the cathode-ray tube; a lower frame secured to the front case; a board bracket secured to the lower frame, for holding the main PCB assembly and having a plurality of exposing holes formed in the lower surface thereof; a bottom bracket having first assembling means for coupling with the board bracket; and a stand, for supporting the display apparatus, having second assembling means for securing to the lower frame while interlocked with the board bracket and the bottom bracket at least via said first assembly means.

It is to be understood that both the foregoing general description and the following detailed description are merely exemplary and are intended to provide further explanation of the invention as claimed.

### BRIEF DESCRIPTION OF THE ATTACHED DRAWINGS

A more complete appreciation of the invention, and many of the attendant advantages thereof will be readily apparent as the same becomes better understood by reference to the following detailed description when considered in conjunction with the accompanying drawings in which like reference symbols represent the same or similar components, wherein:
FIG. 1 is an exploded perspective view of a display apparatus according to the present invention;
FIG. 2 is a more-detailed, exploded perspective view of the featured parts of the apparatus shown in FIG. 1;
FIGS. 3-8 are sequential, side sectional views of the display apparatus according to the present invention, for illustrating its assembly; and
FIG. 9 is an exploded side view of the display apparatus according to the present invention, for illustrating a partially disassembled state thereof.

### DETAILED DESCRIPTION OF THE PREFERRED EMBODIMENT

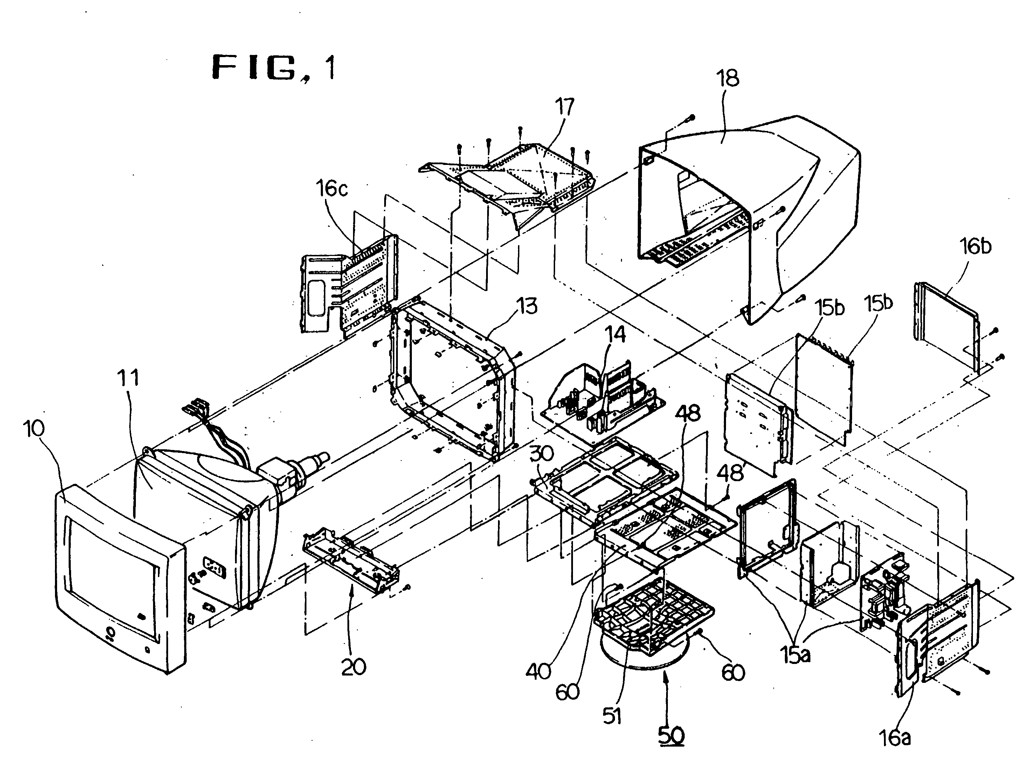

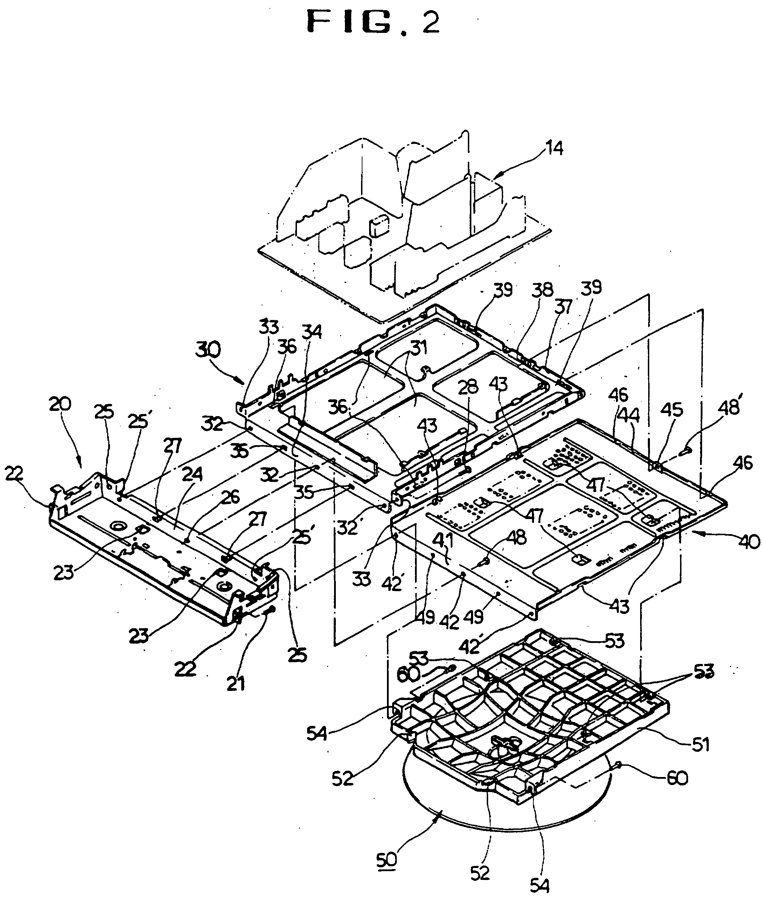

As shown in FIGS. 1 and 2, in a display apparatus according to the present invention, a cathode-ray tube 11 and a cathode-ray tube frame 13 are assembled to a front case 10, and a rear case 18 is provided for enclosing the entire assembly.

A lower frame 20 comprises: side brackets 22 for attachment to the lower portion of the front case 10 using screws 21; locking holes 23 into which locking protrusions 52 formed on a stand base 51 of a stand 50 are inserted; and a rear brace 24 having coupling 27 and side coupling holes 25 and 25' and a central coupling hole 26.

A board bracket 30 comprises: side flanges 33 for coupling with the lower frame 20 using screws 28; a front flange 34 having side coupling holes 32', a central coupling hole 32, and guide holes 35 into which the coupling 27 of the lower frame 20 are inserted; a plurality of hook holes 36 formed in the lower surface for coupling a bottom bracket 40 thereto; a rear wall 37 having a coupling hole 38 and rear hook holes 39; and a plurality of exposing holes 31 formed throughout the lower surface.

The bottom bracket 40 comprises: a front flange 41 having a central coupling hole 42 for coupling to the board bracket 30 and lower frame 20 using a screw 48, and side coupling holes 42'; a rear wall 44 having a central flange 45 for coupling with the board bracket 30 using a screw 48', and rear hooks 46 for insertion into the rear hook holes 39 of the board bracket 30; a plurality of protruding hooks 43 for insertion into the hook holes 36 of the board bracket 30; a plurality of coupling grooves 47 formed in the lower surface into which locking protrusions 53 of the stand base 51 are inserted; and assembling holes 49 for receiving the coupling guides 27 of the lower frame 20 having passed through the guide holes 35 of the board bracket 30. A main PCB assembly 14 is installed atop the board bracket 30, before the coupling of the front flange 34 thereof to the rear brace 24 of the lower frame 20.

The stand 50 comprises flanges 54 for coupling the stand 50 to the lower frame 20 via the bottom bracket 40 and board bracket 30 using screws 60.

Also included in the assembly are side shields 16a, 16b and 16c for protecting side PCB assemblies 15a and 15b, and a top shield 17. An additional side-mounted PCB assembly (opposite 15a) is generally included, but has been omitted from the drawings.

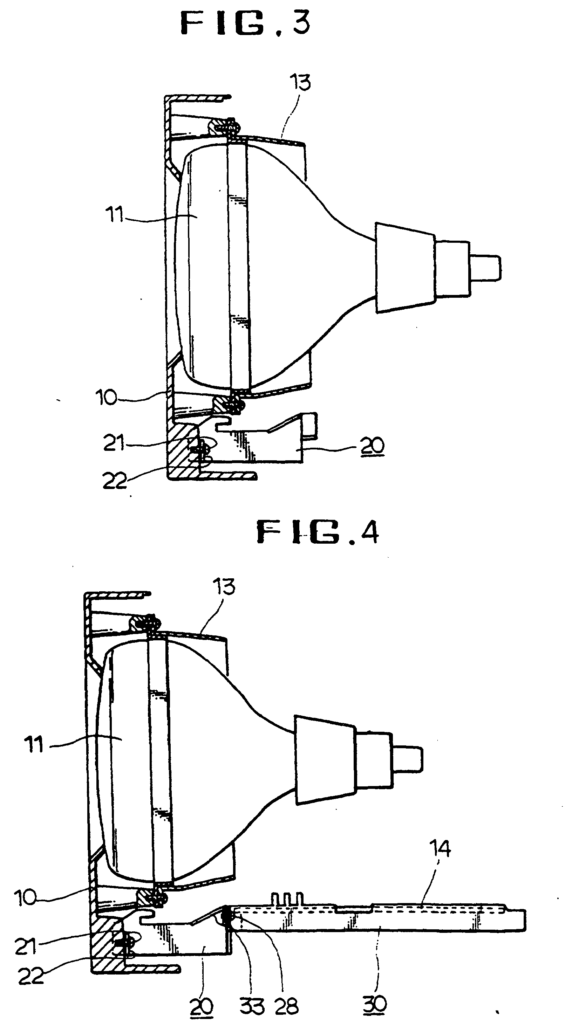

Referring now to Fig. 3, the lower frame 20 is first coupled to the front case 10. Here, using the screws 21, the side brackets of the lower frame 20 are secured to the front case 10 having the cathode-ray tube 11 and cathode-ray tube frame 13 fixed thereto.

In Fig. 4, illustrating the coupling state of the board bracket 30, the board bracket 30 is fixed to the rear of the lower frame 20. Here, the coupling guides 27 of the lower frame 20 are inserted into the guide holes 35 of the board bracket 30, thus aligning the coupling holes 25', 26 and 25 with the coupling holes 32 and 32' and the side flanges 33, respectively, so that the screws 28 may be inserted.

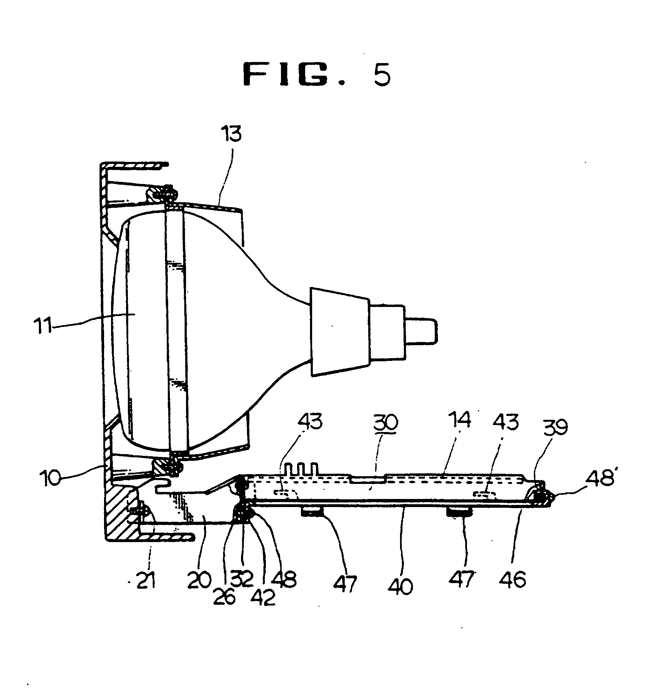

Fig. 5 illustrates the coupling of the bottom bracket 40 to the above assembly, whereby the bottom bracket is firstly attached to the bottom of the board bracket 30 and is secondly fixed to the lower frame 20. Here, the bottom bracket 40 is pushed upward against the board bracket 30 and forward toward the lower frame 20, such that the protruding hooks 43 of the bottom bracket 40 are inserted into the hook holes 36 of the board bracket 30 while the rear hooks 46 are inserted onto the rear hook holes 39, respectively. In doing so, the bottom bracket 40 becomes securely attached to the board bracket 30 so that the fixing process may be performed.

At this time, with the central coupling holes 26, 32 and 42 all in alignment, the lower frame 20, board bracket 30 and bottom bracket 40 are coupled by means of the screws 48. Meanwhile, the coupling hole 38 at the rear of the board bracket 30 is aligned with the central flange 45 of the bottom bracket 40, and the bottom bracket is finally secured by means of the screw 48'.

As an alternative to the above assembling process, the bottom bracket 40 may be coupled with the board bracket 30 before assembly to the lower frame 20.

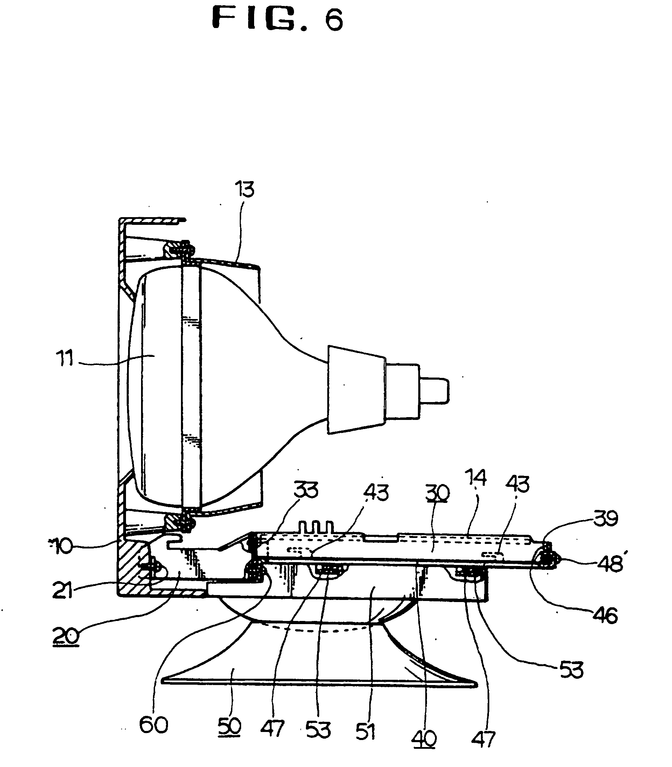

In Fig. 6, the stand 50 is assembled with the bottom bracket 40. Here, the locking protrusions 52 on the stand base 51 are inserted into the lower frame 20, and the locking protrusions 53 of the stand base 51 are inserted into the coupling grooves 47 of the bottom bracket 40. In this state, the stand base 51 is pushed forward and locked into position, thereby aligning the flanges 54 with the side coupling holes 42', 32' and 25', so that the stand 50 may be secured to the entire assembly using the screws 60 which pass through the bottom bracket 40 and board bracket 30 and into the lower frame 20.

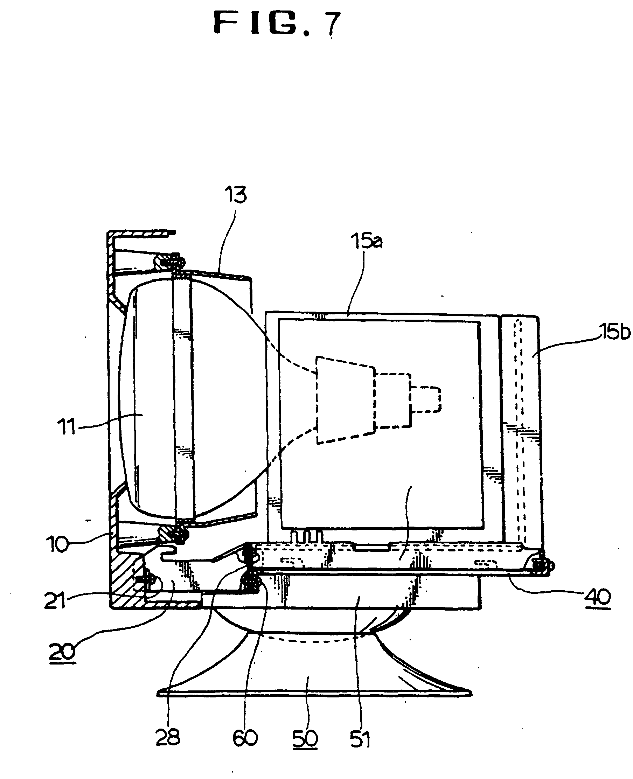

In FIG. 7, the side PCB assemblies 15a and 15b, as well as the third-side PCB assembly (not shown), are all mounted to the periphery of the board bracket 30.

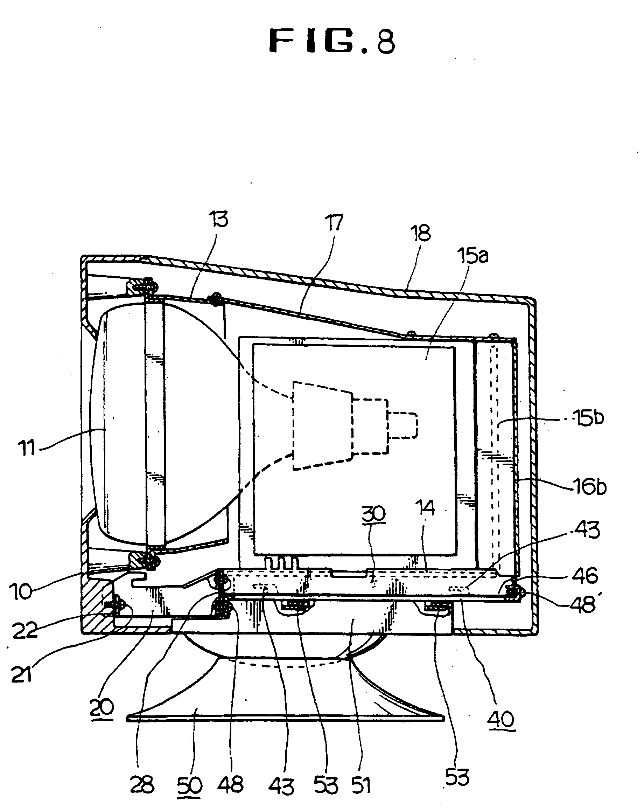

In Fig. 8, the side and top shields 16 and 17 are all installed. The rear case 18 is then attached, to thereby complete the assembly of the display apparatus.

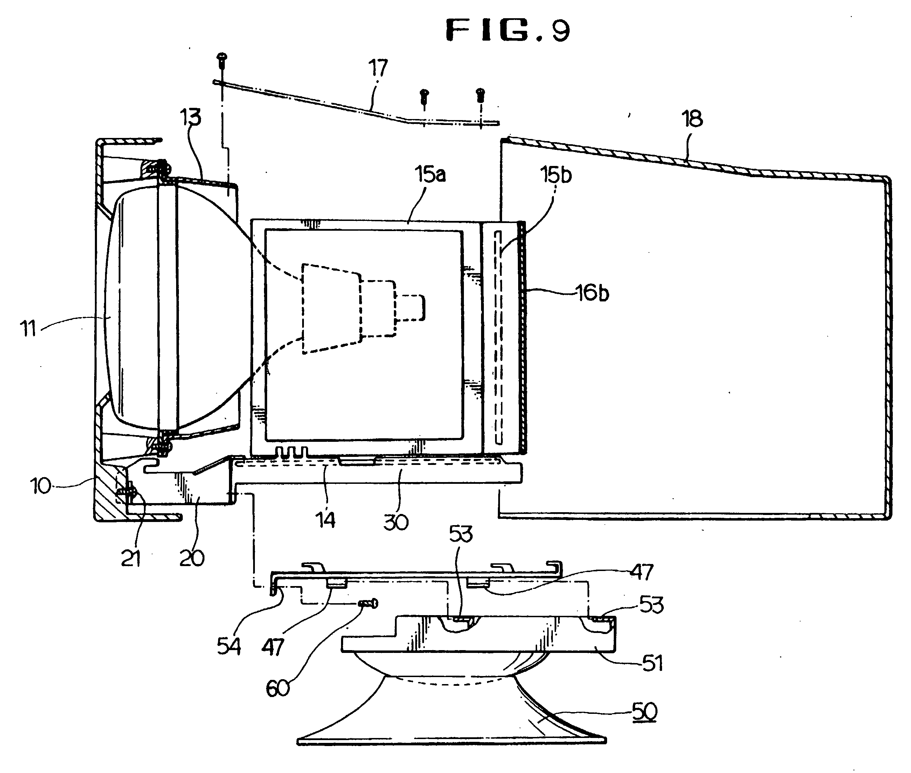

FIG.9 shows a partially disassembled state for repairing a main PCB assembly of the display apparatus, as embodied in the present invention.

With the rear case 70 separated from the display unit and laid aside, the screws 60 are unfastened so that the stand base 50 can be pulled rearward. Here, the locking protrusions 52 and 53 are all separated from the locking holes 23 on the lower frame 20 and the coupling grooves 47 on the bottom bracket 40, respectively, to completely separate the stand 50 from the lower frame 20 and bottom bracket 40. Next, after the screws 48 and 48' are unfastened, the bottom bracket 40 is pulled back and downward, to thereby unlock the hooks 43 and 46 from the hook holes 36 and 39 on the board bracket 30.

In this state, the exposing holes 31 in the board bracket 30 are revealed so that a testing or repairing operation for the circuit components of the main PCB assembly 14 can be achieved. If the top shield 17 is separated, the top circuit components on the main PCB assembly 14 can be also accessed. Thus, the test/repair of the main PCB assembly can be easily achieved, without separating any of the side PCB assemblies or the board bracket 30 from the display apparatus. Thereafter, reassembly is performed in the same manner as described above.

As apparent from the above, a display apparatus according to the present invention simplifies repair operations, thus enhancing product value.

It will be apparent to those skilled in the art that various modifications can be made in the display apparatus of the present invention, without departing from the spirit of the invention. Thus, it is intended that the present invention cover such modifications as well as variations thereof within the scope of the appended claims.

## Claims

1. A display apparatus comprising:
a front case (10) for housing a cathode-ray tube (11) on which images are displayed;
a main printed circuit board (PCB) assembly (14) installed beneath said cathode-ray tube;
a lower frame (20) secured to said front case;
a board bracket (30) secured to said lower frame, for holding said main PCB assembly and having a plurality of exposing holes (31) formed in the lower surface thereof;
a bottom bracket (40) having first assembling means (41, 42, 48, 48'; 36, 39, 43, 46, 44, 45) for coupling with said board bracket; and
a stand (50), for supporting the display apparatus, having second assembling means (54,60) for securing to said lower frame while interlocked with said board bracket and said bottom bracket at least via said first assembly means.

2. The display apparatus as claimed in claim 1, further comprising alignment means (22,32,32',33;27,35,38,49) for aligning said board bracket and said bottom bracket with said lower frame.

3. The display apparatus as claimed in claim 2, wherein said alignment means comprises:
coupling protrusions (22) formed on said lower frame; and
coupling holes (33;32,32') formed in said board bracket and bottom bracket, respectively.

4. The display apparatus as claimed in claim 1, wherein said plurality of exposing holes formed in said board bracket allows access to the bottom of said main PCB assembly secured on said board bracket, while said bottom bracket is separated from the display apparatus.

5. The display apparatus as claimed in claim 1, wherein said first assembling means comprises primary and secondary fixing means (36, 39, 43, 46; 41, 44, 45, 48, 48').

6. The display apparatus as claimed in claim 5, wherein said primary fixing means is comprised of a plurality of hook holes (36,39) formed in said board bracket and a plurality of hooks (43, 46) formed on said bottom bracket, thereby allowing said bottom bracket to be manually coupled to said board bracket.

7. The display apparatus as defined in claim 5, wherein said secondary fixing means is comprised of front and rear flanges (41;44,45) provided on opposite ends of said bottom bracket, serving to secure said bottom bracket to said board bracket, using first and second screws (48,48').

8. The display apparatus as defined in claim 1, wherein said second assembling means is comprised of a flange (54) provided on either side of said stand, serving to secure said stand, bottom bracket and board bracket concurrently, using a pair of externally accessible screws (60).

9. The display apparatus as claimed in claim 1, further comprising a top shield (17) for protecting the cathode-ray tube, wherein access to the top of said main PCB assembly is sustained by removal of said top shield and access to the bottom surface of said main PCB assembly is sustained by removal of said stand and bottom bracket.

## Patentansprüche

1. Anzeigevorrichtung mit:
einem vorderen Gehäuse (10) zum Unterbringen einer Kathodenstrahlröhre (11), auf welcher Bilder wiedergegeben werden;
einer Hauptleiterplatten- (PCB) Einheit (14), welche unterhalb der Kathodenstrahlröhre befestigt ist;
einen unteren Rahmen (20), welcher am vorderen Gehäuse befestigt ist;
einen Leiterplattenträger (30), welcher am unteren Rahmen zum Halten der Haupt-PCB-Einheit befestigt ist und eine Vielzahl von freiliegenden Öffnungen (31) aufweist, welche in der Unterseite desselben gebildet sind;
einen Bodenträger (40) mit einer ersten Montagevorrichtung (41, 42, 48, 48'; 36, 39, 43, 46; 44, 45) zum Verbinden mit dem Leiterplattenträger; und
einen Fuß (50) zum Tragen der Anzeige- bzw. Displayvorrichtung mit einer zweiten Montagevorrichtung (54, 60) zum Befestigen am unteren Rahmen, während er mit dem Leiterplattenträger und dem Bodenträger zumindest über die erste Montagevorrichtung arretiert ist.

2. Anzeigevorrichtung nach Anspruch 1, welche weiter Ausrichtvorrichtungen (22, 32, 32', 33; 27, 35, 38, 49) zum Ausrichten des Leiterplattenträgers und der Bodenträgers mit dem unteren Rahmen aufweist.

3. Anzeigevorrichtung nach Anspruch 2, wobei die Ausrichtvorrichtung folgendes aufweist:
Verbindungsvorsprünge (22), welche am unteren Rahmen gebildet sind; und
Verbindungsöffnungen (33; 32, 32'), welche im Leiterplattenträger bzw. Bodenträger gebildet sind.

4. Anzeigevorrichtung nach Anspruch 1, wobei die im Leiterplattenträger gebildete Vielzahl an freiliegenden Öffnungen einen Zugang zum Boden der Hauptleiterplatteneinheit gestattet, welcher am Leiterplattenträger befestigt ist, während der Bodenträger von der Anzeige- bzw. Bildschirmvorrichtung getrennt ist.

5. Anzeigevorrichtung nach Anspruch 1, wobei die erste Montagevorrichtung primäre und sekundäre Befestigungsmittel (36, 39, 43, 46; 41, 44, 45, 48, 48') aufweist.

6. Anzeigevorrichtung nach Anspruch 5, wobei das primäre Befestigungsmittel aus einer Vielzahl an Hakenöffnungen (36, 39), welche im Leiterplattenträger gebildet sind, und einer Vielzahl an Haken (43, 46) besteht, welche auf dem Bodenträger gebildet sind, wodurch der Bodenträger manuell mit dem Leiterplattenträger verbunden werden kann.

7. Anzeigevorrichtung nach Anspruch 5, wobei das sekundäre Befestigungsmittel aus vorderen und hinteren Flanschen (41; 44, 45) besteht, welche auf gegenüberliegenden Seiten des Bodenträgers vorgesehen sind und zum Befestigen des Bodenträgers am Leiterplattenträger mittels erster und zweiter Schrauben (48, 48') dienen.

8. Anzeigevorrichtung nach Anspruch 1, wobei die zweite Montagevorrichtung aus einem Flansch (54) besteht, welcher auf beiden Seiten des Fußes vorgesehen ist und zum Befestigen des Fußes, des Bodenträgers und des Leiterplattenträgers aneinander mittels einem Paar von außen erreichbaren Schrauben (60) dient.

9. Anzeigevorrichtung nach Anspruch 1, weiter eine obere Abdeckung (17) zum Schützen der Kathodenstrahlröhre aufweisend, wobei der Zugang zur Oberseite der Hauptleiterplatteneinheit durch das Entfernen der oberen Abdeckung und der Zugang zur Unterseite der Hauptleiterplatteneinheit durch das Entfernen des Fußes und des Bodenträgers erhalten wird.

## Revendications

1. Dispositif d'affichage comprenant :
un boîtier avant (10) pour le logement d'un tube cathodique (11) sur lequel des images sont affichées ;
un ensemble de carte à circuit imprimé principal (14) installé sous ledit tube cathodique ; un cadre inférieur (20) fixé audit boîtier avant ;
un support de carte (30) fixé audit cadre inférieur, pour le maintien dudit ensemble de carte à circuit imprimé principal et ayant une pluralité de trous d'exposition (31) formés dans la surface inférieure de celui-ci ;
un support inférieur (40) ayant des premiers moyens d'assemblage (41, 42, 48, 48' ; 36, 3 9, 43, 46 ; 44, 45) pour le couplage avec ledit support de carte ; et
un pied (50), pour le maintien de l'appareil d'affichage, ayant des seconds moyens d'assemblage (51, 60) pour la fixation audit cadre inférieur tout en étant verrouillé avec ledit support de carte et ledit support inférieur au moins via lesdits premiers moyens d'assemblage.

2. Dispositif d'affichage selon la revendication 1, comprenant en outre des moyens d'alignement (22, 32, 32', 33 ; 27, 35, 38, 49) pour l'alignement dudit support de carte et dudit support inférieur avec ledit cadre inférieur.

3. Dispositif d'affichage selon la revendication 2, dans lequel lesdits moyens d'alignement comprennent :
des saillies de couplage (22) formées sur ledit cadre inférieur ; et
des trous de couplage (33, 32, 32') formés dans ledit support de carte et ledit support inférieur, respectivement.

4. Dispositif d'affichage selon la revendication 1, dans lequel ladite pluralité de trous d'exposition formés dans ledit support de carte permet l'accès à la partie inférieure dudit ensemble de carte à circuit imprimé principal fixé sur ledit support de carte, alors que ledit support inférieur est séparé de l'appareil d'affichage.

5. Dispositif d'affichage selon la revendication 1, dans lequel. lesdits premiers moyens d'assemblage comprendront des moyens de fixation primaires et secondaires (36, 39, 43, 46 ; 41, 44, 45, 48, 48').

6. Dispositif d'affichage selon la revendication 5, dans lequel lesdits moyens de fixation primaires sont composés d'une pluralité de trous de crochet (36, 39) formés dans ledit support de carte et d'une pluralité de crochets (43, 46) formés sur ledit support inférieur, permettant ainsi audit support inférieur d'être couplé manuellement audit support de carte.

7. Dispositif d'affichage selon la revendication 5, dans lequel lesdits moyens de fixation secondaires sont composés de collerettes avant et arrière (47 ; 44, 45) fournies sur les extrémités opposées dudit support inférieur, servant à fixer ledit support inférieur audit support de carte, en utilisant une première et seconde vis (48, 48').

8. Dispositif d'affichage selon la revendication 1, dans lequel lesdits seconds moyens d'assemblage sont composés d'une collerette (54) fournie sur l'un quelconque des côtés dudit pied, servant à fixer ledit pied, le support inférieur et le support de carte simultanément, en utilisant une paire de vis accessibles de l'extérieur (60).

9. Dispositif d'affichage selon la revendication 1, comprenant en outre un blindage supérieur (17) pour la protection du tube cathodique, dans lequel l'accès à la partie supérieure dudit ensemble de carte à circuit imprimé principal est obtenu par le retrait dudit blindage supérieur et l'accès à la surface inférieure dudit ensemble de carte à circuit imprimé principale est obtenu par le retrait desdits pied et support inférieur.
